(19) Europäisches Patentamt
European Patent Office
Office européen des brevets

(11) **EP 0 930 953 B1**

(12) **EUROPEAN PATENT SPECIFICATION**

(45) Date of publication and mention
of the grant of the patent:
**28.07.2004 Bulletin 2004/31**

(51) Int Cl.⁷: **B23K 26/00**, F16C 33/10,
F16C 33/00, B32B 3/26

(21) Application number: **97944330.6**

(22) Date of filing: **22.09.1997**

(86) International application number:
**PCT/US1997/016764**

(87) International publication number:
**WO 1998/014710 (09.04.1998 Gazette 1998/14)**

(54) **BEARING HAVING MICROPORES, AND DESIGN METHOD THEREOF**

LAGER MIT MICROPOREN UND VERFAHREN ZU SEINER HERSTELLUNG

PALIER PRESENTANT DES MICROPORES ET SON PROCEDE D'ELABORATION

(84) Designated Contracting States:
**BE DE FR GB IT SE**

(30) Priority: **30.09.1996 US 723431**
**05.09.1997 US 924643**

(43) Date of publication of application:
**28.07.1999 Bulletin 1999/30**

(73) Proprietor: **Surface Technologies Ltd.**
**36601 Nesher (IL)**

(72) Inventors:
• **ETSION, Izhak**
**34750 Haifa (IL)**
• **KINROT, Ofer**
**43370 Raanana (IL)**

(74) Representative: **Modiano, Guido, Dr.-Ing. et al**
**Modiano, Josif, Pisanty & Staub,**
**Baaderstrasse 3**
**80469 München (DE)**

(56) References cited:
US-A- 4 573 690        US-A- 4 997 192
US-A- 5 137 373        US-A- 5 385 409
US-A- 5 473 138

• **TRIBOLOGY TRANSACTIONS, July 1996, Vol.
39, No. 3, ETSION I. et al., "A Model for
Mechanical Seals with Regular Microsurface
Structure", pages 677-683 XP001094562**

## EP 0 930 953 B1

**Description**

The present invention relates to a bearing with improved frictional behavior and, more particularly, to a bearing having a load-bearing surface whose load-carrying capacity is improved by the presence of micropores.

It is well known from the theory of hydrodynamic lubrication that when two parallel surfaces, separated by a lubricating film, slide at some relative speed with respect to each other, no hydrodynamic pressure, and hence no separating force, can be generated in the lubricating film. The mechanism for hydrodynamic pressure buildup requires a converging film thickness in the direction of sliding. In conventional applications, this often is obtained by some form of misalignment or eccentricity between the sliding surfaces, for example, hydrodynamic thrust and journal bearings. Macrosurface structure, particularly in the form of waviness on the sliding surfaces, has been studied in the past for both parallel face thrust bearings and mechanical seals. The load carrying capacity in these cases is due to an asymmetric hydrodynamic pressure distribution over the wavy surface. The pressure increase in the converging film regions is much larger than the pressure drop in the diverging film regions. This is because the pressure drop is bounded from below by cavitation, whereas the pressure increase has effectively no upper limit. Microsurface structure in the form of protruding microasperities on the sliding surfaces also can be used to generate a locally asymmetric pressure distribution with local cavitation. The integrated effect of these microasperities can be useful in producing separating force between parallel sliding surfaces. Asymmetric pressure distribution also can be obtained by depressed surface structures, and various forms of grooves are used in bearings and mechanical seals. See, for example, T. W. Lai, "Development of NonContacting, Non-Leaking Spiral Groove Liquid Face Seals", *Lubr. Eng.* vol. 50 pp. 625-640 (1994).

US Patent no. 5,385,409 discloses a non-contacting rotary mechanical seal, in which at least one of the opposed faces has a deflection bearing portion comprising a spaced series of lift pad sections.

US Patent no. 5,473,138 discloses a method for increasing the surface area and roughness of various materials on a micro-scale using a laser beam.

US Patent no. 4,997,192 discloses a mechanical seal having a rotating seal ring and a non-rotating seal ring, at least one of the two rings being made of a pore-dispersed material containing pores in an amount of 0.5 to 20 volume %.

Microsurface structure in the form of micropores would have several advantages over other microsurface structures, particularly those involving protruding structures, in moving load-bearing surfaces. These advantages include:

1. Ease of manufacturing.
2. The ability to optimize pore size, shape, and distribution using theoretical models.
3. Good sealing capability in stationary machinery.
4. Providing microreservoirs for lubricant under starved lubrication conditions, for example, at startup and after lubricant loss.
5. Providing the capacity to sequester small wear debris.

There is thus a widely recognized need for, and it would be highly advantageous to have, bearings with micropore structure in their load-bearing surfaces and a method for designing the distribution and geometry of the micropores.

SUMMARY OF THE INVENTION

According to the present invention there is provided a method for designing and manufacturing a bearing having a plurality of micropores in a surface thereof, according to claim 1.

According to the present invention there is further provided a bearing according to claim 13.

The closest prior art is represented by I. Etsion and L. Burstein ("A Model for Mechanical Seals with Regular Microsurface Structure", *STLE Preprint* No. 95-TC-2B-1, October 1995, they have modeled hemispherical pores evenly distributed over the surface area of a seal ring. They studied the effect of pore size and percentage of ring surface area covered by the pores on the operating performance of the seal. The present invention is an extension of that work, including pores shaped like cones and spherical caps. The scope of the present invention includes both a method for designing an optimal micropore density and geometry for the load bearing surfaces of bearings, and the bearings thus designed. Although the load bearing surfaces modeled herein are referred to as "seal rings", it is to be understood that the method of the present invention applies to load bearing surfaces generally, not just to seal rings. Furthermore, the term "bearing" as used herein includes all systems with surfaces in contact that bear loads and move relative to each other, for example reciprocating systems such as pistons in cylinders, and not just bearings *per se*. In addition, the term "seal fluid" as used herein refers to the fluid that separates the bearing surfaces, whether the primary function of that fluid is to act as a seal or as a lubricant.

The micropores of the present invention optimally are on the order of several microns to several tens of microns deep and several tens of microns wide. The use of a laser beam to create such micropores has been proposed, notably in BRITE-EURAM Proposal NR 5820, a research project, sponsored by the Commission of the European Communities, to develop self lubricating silicon carbide bearings. In that project, the lasers were used in a research mode, to create micropores of various controlled sizes, shapes, and density, in silicon carbide surfaces, in order to determine the optimal size, shape, and density to use in silicon carbide bearings. Lasers offer a convenient way to create micropores of specific shapes. A single laser pulse tends to create a substantially conical crater. A wide variety of shapes can be created by a suitable pattern of multiple pulses of carefully controlled location and energy.

BRIEF DESCRIPTION OF THE DRAWINGS

FIG. 1A is a schematic cross section of a bearing with hemispherical micropores;
FIG. 1B is a schematic cross section of a bearing with micropores in the form of spherical caps;
FIG. 1C is a schematic cross section of a bearing with conical micropores;
FIG. 2 is a schematic top view of a portion of a seal ring;
FIGS. 3A and 3B are graphs of clearance vs. depth/diameter ratio for micropores in the form of spherical caps;
FIGS. 4A and 4B are graphs of clearance vs. depth/diameter ratio for conical micropores;
FIG. 5 is a profile of a micropore created in steel;
FIG. 6 is a perspective view of a hard disk slider head, textured according to the present invention.

DESCRIPTION OF THE PREFERRED EMBODIMENTS

The present invention is of a method for designing load-bearing surfaces of bearings.. Specifically, the present invention can be used to design and manufacture bearings whose load-bearing surfaces feature micropores of an optimal density and shape.

The principles and operation of bearing design according to the present invention may be better understood with reference to the drawings and the accompanying description.

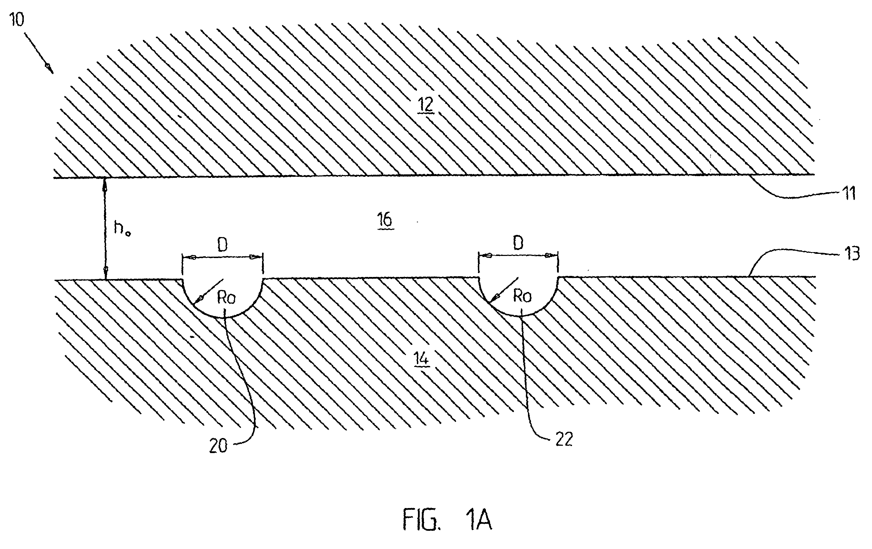

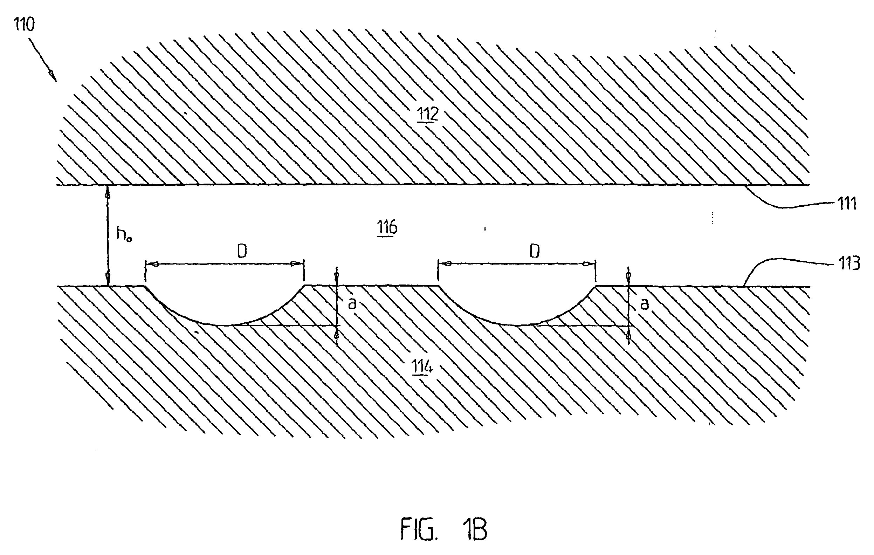

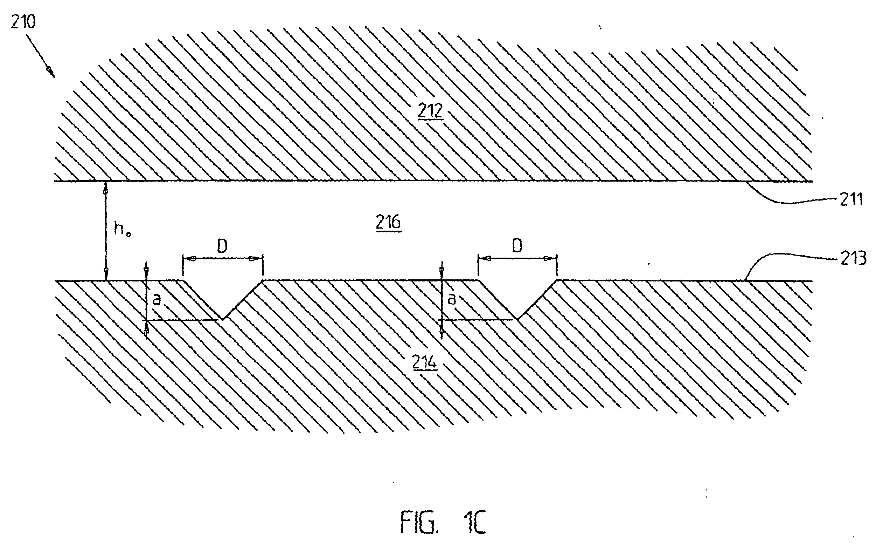

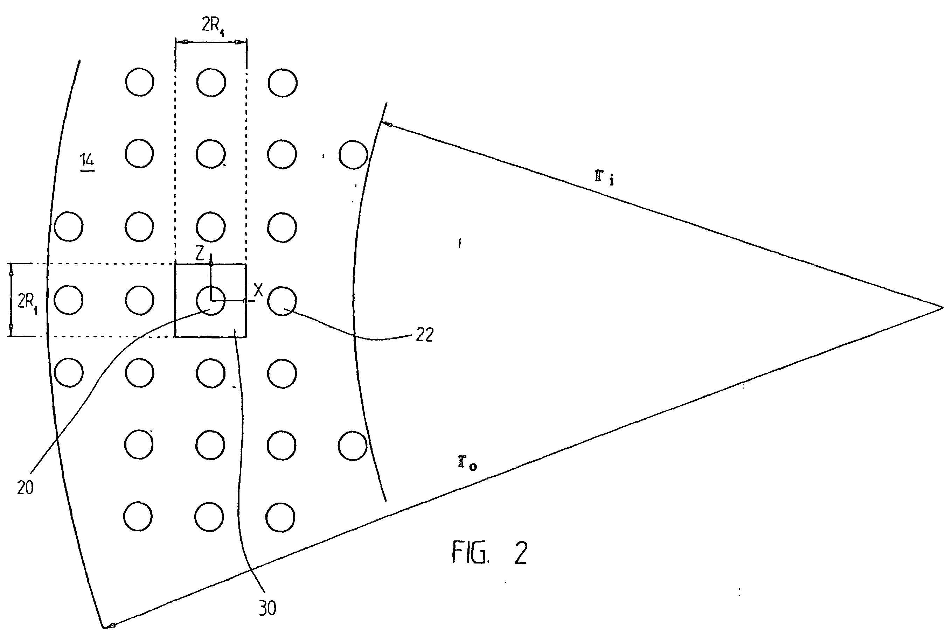

Referring now to the drawings, the pore geometry and distribution used to model hydrodynamic pressure distribution is shown in Figures 1A, 1B, 1C and 2. Figure 1A is a schematic cross section of a bearing **10** which does not fall within the scope of the claims, comprising an upper surface **11** of an upper seal ring **12** and a lower surface **13** of a lower seal ring **14,** separated by a gap **16** of width $h_0$. In lower surface **13** are two hemispherical pores **20** and **22** of diameter $D$ and radius $R_0 = D/2$. This is the geometry that was modeled by Etsion and Burstein. Figure 1B is a similar schematic cross section of a bearing **110,** also comprising an upper surface **111** of an upper seal ring **112** and a lower surface **113** of a lower seal ring **114** separated by a gap **116** of width $h_0$. In lower surface **113** are two pores **120** and **122** shaped as spherical caps of diameter $D$ and depth $a$. Figure 1C is a similar schematic cross section of a bearing **210,** also comprising an upper surface **211** of an upper seal ring **212** and a lower surface **213** of a lower seal ring **214** separated by a gap **216** of width $h_0$. In lower surface **213** are two conical pores **220** and **222** of diameter $D$ and depth $a$.

Figure 2 is a schematic top view of a portion of seal ring **14** showing its lateral geometry. Seal ring **14** is an annulus having an inner radius $r_i$ and outer radius $r_o$. Each pore is located in the middle of an imaginary "control cell" of sides $2R_1 \times 2R_1$. For example, pore **20** is shown in the middle of a control cell **30**. Also shown is a portion of the Cartesian coordinate system used in the modeling: the x-axis points to the right and the z axis points up. The y-axis (not shown) points into the plane of the paper. In Figures 1A, 1B, and 1C, the y-axis would point from the upper surface (**11**, **111** or **211**) to the lower surface (**13**, **113** or **213**). The pores are arranged in a rectangular grid, but they also could be arranged in any other regular arrangement, for example, an axi-symmetric arrangement. Seal rings **114** and **214** are modeled similarly.

The pores are evenly distributed with an area ratio $S$ that is no more than about 30% of the surface area of seal ring **14**, and a pore diameter $D$ that is at least an order of magnitude smaller than the width of seal ring **14**, $r_o - r_i$. Hence, the distance between neighboring pores, $2R_1$, is large enough to justify the assumption of negligible interaction between the pores. Although the method and results described herein use a uniform pore distribution, it is easy for one ordinarily skilled in the art to extend the method to non-uniform pore distributions.

The control cell serves as the basic unit for calculations. The basic assumptions used herein are:

1. The seal is an all-liquid noncontacting seal, with parallel faces separated by a constant film thickness $h_0$.
2. Curvature effects of the seal rings can be neglected. Hence, a uniform circumferential velocity $U$ is assumed, and a linear pressure drop from the seal's outer to inner circumference.
3. The seal fluid is a Newtonian liquid having a constant viscosity $\mu$.

4. Half-Sommerfeld condition is assumed whenever cavitation occurs. Although this assumption introduces a certain error in the flow around the control cell, it saves computing time without altering the general trend of the solution for load capacity.

The Reynolds equation for the hydrodynamic pressure components over a single control cell is:

$$\frac{\partial}{\partial x}\left(h^3 \frac{\partial p}{\partial x}\right) + \frac{\partial}{\partial z}\left(h^3 \frac{\partial p}{\partial z}\right) = 6\mu U \frac{\partial h}{\partial x} \qquad (1)$$

The local film thickness, $h$, in the region $2R_1$ x $2R_1$ of a control cell is:

$$h = h_0 \qquad (2a)$$

outside the pore where $(x^2 + z^2)^{1/2} > D/2$.

Over the pore area, the film thickness is, for a hemisphere:

$$h = h_0 + R_0 \left[ 1 - \left(\frac{x}{R_0}\right)^2 - \left(\frac{z}{R_0}\right)^2 \right]^{1/2} \qquad (2b)$$

for a spherical cap:

$$h = h_0 + a + \sqrt{R^2 - x^2 - z^2} - R \qquad (2c)$$

where $R = \frac{a}{2} + \frac{D^2}{8a}$; and, for a cone:

$$h = h_0 + \frac{2a}{D}\left[\frac{D}{2} - \sqrt{x^2 + z^2}\right] \qquad (2d)$$

The boundary conditions of Equation (1 ) are $p = 0$ at $x = \pm R_1$ and at $z = \pm R_1$.

The total local pressure over each control cell is the sum of the pressure $p$ obtained from Equation (1) and the local hydrostatic pressure component $p_s$ given by:

$$p_s = p_i + (p_0 - p_i)\frac{r - r_i}{r_o - r_i} \qquad (3)$$

Using dimensionless variables of the form $X = 2x/D$, $Z = 2z/D$, $\xi = 2R_1/D$, $H = h/h_0$, $\psi = D/2h_0$ and $P = p/\Lambda$, where:

$$\Lambda = 3\mu UD/h_0^2 \qquad (4)$$

the dimensionless Reynolds equation becomes

$$\frac{\partial}{\partial X}\left(H^3 \frac{\partial P}{\partial X}\right) + \frac{\partial}{\partial Z}\left(H^3 \frac{\partial P}{\partial Z}\right) = \frac{\partial H}{\partial X} \qquad (5)$$

where $H=1$ outside the pore and, over the pore, $H$ is equal to the dimensionless equivalent of the right hand side of Equation (2b) or its analogs for non-hemispherical geometries. The dimensionless boundary conditions are $P=0$ at $X=\pm\xi$ and $Z=\pm\xi$. The dimensionless size $\xi$ of the control cell can be found from the pore ratio $S$ by:

$$16R_1^2 S = \pi D^2 \tag{6}$$

or:

$$\xi = \frac{1}{2}\left(\frac{\pi}{S}\right)^{1/2} \tag{7}$$

The total dimensionless local pressure $P_t$ is the sum:

$$P_t = P + P_s \tag{8}$$

where $P_s$ is the dimensionless local hydrostatic pressure component obtained from Equation (3).

Only control cells with cavitation contribute to the hydrodynamic load-carrying capacity of the seal rings. Hence, before any performance prediction is made, a search for pores with cavitation must be performed. The pores closer to the seal inner radius $r_i$ are those with the higher chances for cavitation. The hydrostatic pressure $P_s$ over these pores may not be high enough to eliminate cavitation. Thus, the search starts from the inner radius $r_i$ and progresses along radial lines towards the outer radius $r_o$. At each point of a cavitating $n$-th control cell where the total pressure $P_t$ of Equation (8) is negative, the hydrodynamic pressure $P$ is set equal to zero, in accordance with the half-Sommerfeld condition for cavitation. Then the hydrodynamic load support provided by such cavitating $n$-th control cell is calculated from:

$$\overline{W_n} = \int_{-\xi}^{\xi}\int_{-\xi}^{\xi} P\,dX\,dZ \tag{9}$$

Once a control cell with a positive pressure $P$ over its entire area is found, the search along this radial line is ended and the next radial line is examined.

The total dimensional opening force tending to separate the seal rings is:

$$W = \pi\left(r_o^2 - r_i^2\right)\left(p_o - p_i\right) + \sum_{n=1}^{N_c} W_n \tag{10}$$

where $N_c$ is the number of cavitating control cells and $W_n$, the dimensional load support of the n-th cell, is related to $\overline{W_n}$ of Equation (9) by:

$$W_n = \overline{W_n}\Lambda R_0^2 \tag{11}$$

It should be noted that $\overline{W_n}$ and hence $W$ was found for a given value of $\psi$ which depends on the seal clearance $h_0$ that is actually unknown a priori. This clearance is the result of a balance between the opening force $W$ and the closing force $F_c$ given by:

$$F_c = \pi(r_o^2 - r_i^2)[p_f + k(p_o - p_i)] \tag{12}$$

where $p_f$ is the spring pressure and $k$ is the seal balance ratio. Hence, an iterative procedure is required to find $h_o$. First a certain clearance is assumed and the corresponding opening force $W$ is calculated and compared with the closing force $F_c$. If balance is not achieved the seal clearance is altered and the procedure is repeated. The iterations continue until a certain convergence criterion is met or until the value of the seal clearance falls below a certain limit. In this case, partial face contact is assumed.

Numerical results for hemispherical micropores were presented in Etsion and Burstein. Herein are presented calculated values of seal clearance for spherical caps and for cones.

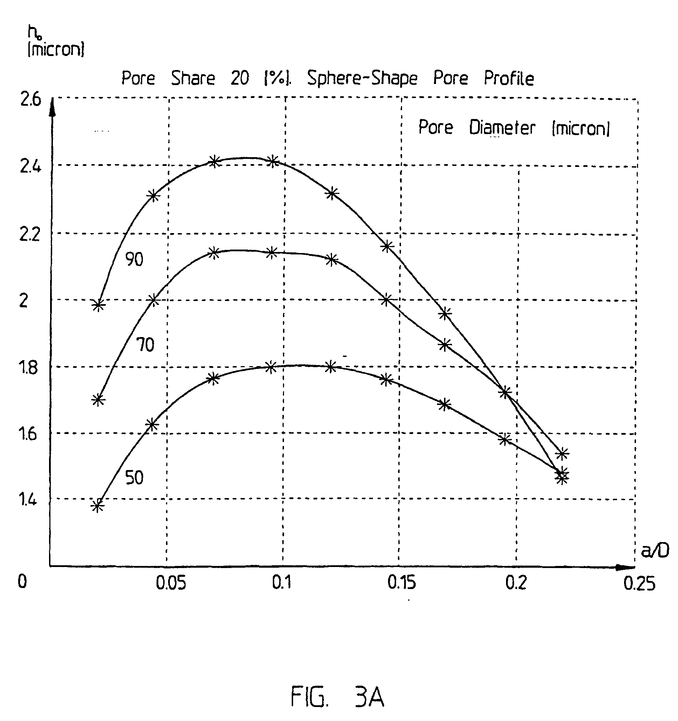

Figure 3A shows values of $h_0$, in microns, vs. the ratio $a/D$ (the reciprocal of the aspect ratio) for micropores in the form of spherical caps, of diameter $D$ equal to 50, 70, and 90 microns, that cover 20% of lower surface **114**. The other system parameters in this example are:

Mean sliding velocity $U$ = 6.702 m/sec
Inner radius $r_t$ = 13mm
Outer radius $r_o$ = 19mm
Fluid viscosity $\mu$ = 0.03 Pa-sec
Inner pressure $p_i$ = 0.11 Mpa
Outer pressure $p_o$ = 0.1 Mpa
Spring pressure $p_s$ = 0.1044 Mpa
Balance ratio = 0.75

The highest clearance $h_o$ achieved is 2.412 microns, using micropores 90 microns in diameter and with a ratio $a/D$ of 0.07. Note that the curves decrease monotonically to the right. Hemispherical pores ($a/D$ = 0.5) would display significantly poorer performance than the high aspect ratio pores modeled herein.

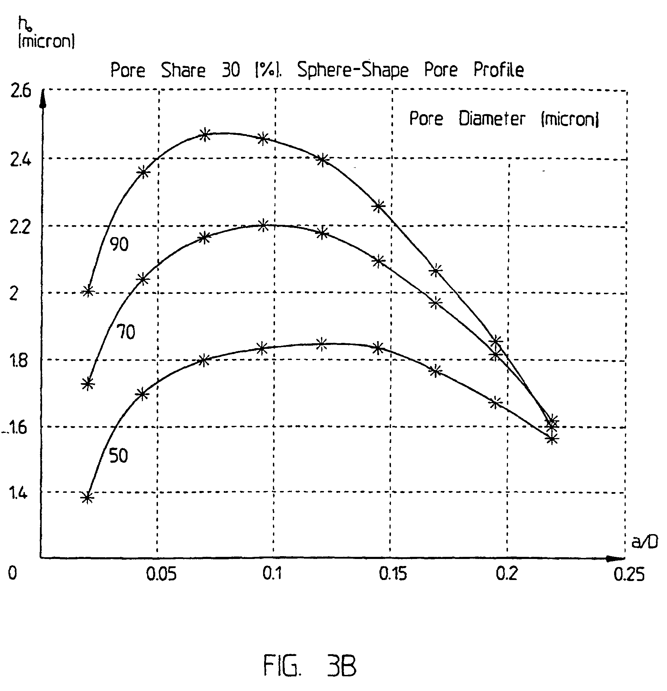

Figure 3B shows values of $h_0$, in microns, vs. the ratio $a/D$ for micropores in the form of spherical caps, of diameter $D$ equal to 50, 70, and 90 microns, that cover 30% of lower surface **114**. The other system parameters are the same as in figure 3A. The highest clearance $h_o$ achieved is 2.476 microns, using micropores 90 microns in diameter and with a ratio $a/D$ of 0.07.

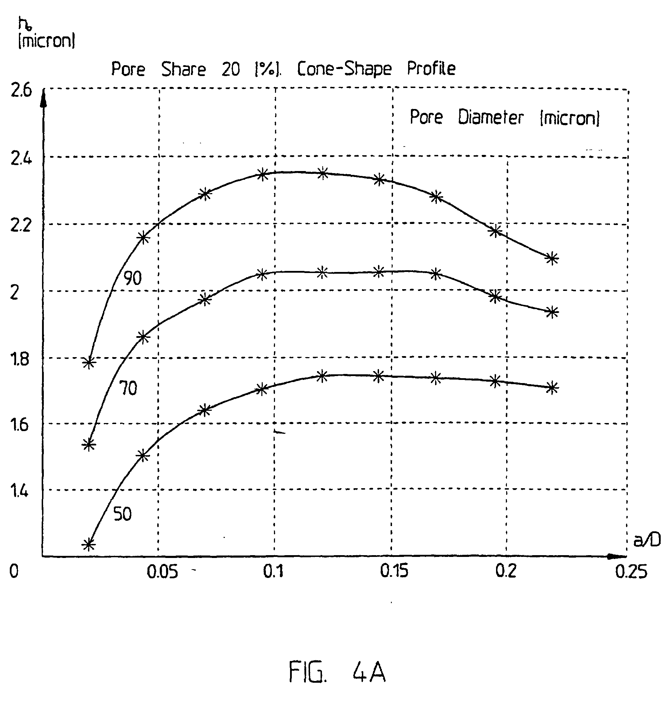

Figure 4A shows values of $h_0$, in microns, vs. the ratio $a/D$ for conical micropores, of diameter $D$ equal to 50, 70, and 90 microns, that cover 20% of lower surface **214**. The other system parameters are the same as in figure 3A. The highest clearance $h_o$ achieved is 2.335 microns, using micropores 90 microns in diameter and with a ratio $a/D$ of 0.095.

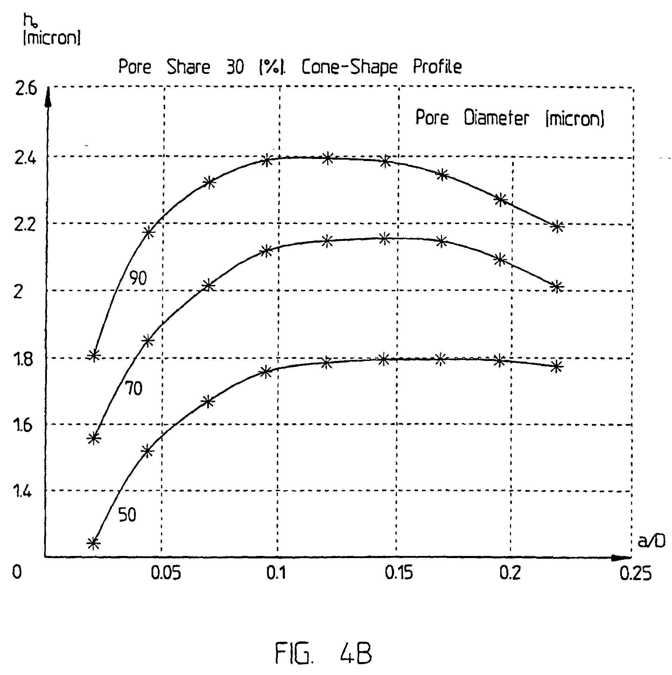

Figure 4B shows values of $h_0$, in microns, vs. the ratio $a/D$ for conical micropores, of diameter $D$ equal to 50, 70, and 90 microns, that cover 30% of lower surface **214**. The other system parameters are the same as in figure 3A. The highest clearance $h_o$ achieved is 2.397 microns, using micropores 90 microns in diameter and with a ratio $a/D$ of 0.12.

The results for spherical caps shown in Figures 3A and 3B are qualitatively similar to the results for cones shown in Figures 4A and 4B. Generally, the best performing micropores have $a/D$ ratios of between 0.05 and 0.15, corresponding to aspect ratios between about 7 and about 20. Nevertheless, as a practical matter, conical micropores are superior to micropores in the form of spherical caps. First, conical micropores are easier to create than spherical micropores. As noted above, a single laser pulse creates a substantially conical micropore. Several laser pulses are needed to shape a substantially spherical micropore. Second, the $h_o$ vs. $a/D$ curves of Figures 4A and 4B are generally flatter near their maxima than the $h_o$ vs. $a/D$ curves of Figures 3A and 3B, showing that bearings with conical micropores are less sensitive to small variations around the geometric optimum than bearings with spherical micropores. Other things being equal, a bearing with a higher micropore density displays slightly better performance than a bearing with a lower micropore density. This fact must be balanced against the higher cost of fabricating more micropores.

The method of the present invention is based on modeling a hydrodynamic pressure distribution, and therefore applies only to lubricated load-bearing surfaces in motion relative to each other. Nevertheless, the bearings of the present invention include bearings with micropores designed for starved lubrication conditions, for example at the start of relative motion, or under conditions of loss of lubricating fluid. Under these conditions, the micropores must serve as reservoirs for the lubricating fluid. The optimal shape for rotationally symmetric micropores parametrized by a depth a and a diameter $D$ is an $a/D$ ratio of about 0.5, for example, hemispherical pores. The optimal depth of these pores is between about 20 microns and about 60 microns. The most preferred embodiments of the bearings of the present invention include on their load bearing surfaces both micropores optimized for hydrodynamic load bearing conditions and micropores optimized for starved lubrication conditions.

The shape of a substantially conical micropore created by a single laser pulse may be controlled by changing the laser beam profile. The micropores thus created usually are substantially conical; but unwanted perturbations such as bulges or rims around the micropores may be eliminated in this manner. The laser beam profile is changed, either by inserting, in the optical path, apertures that create diffraction effects at the focal spot of the laser, or by allowing multi-mode operation of the laser beam to create a flat-top intensity profile. Another method is to use tailored optics, for example diffractive optics, to create flat-top or annular intensity profiles.

The size of the micropores is controlled by changing the parameters of the optical system used to focus the laser beam onto the surface. The optical system includes an expanding telescope and a focusing lens. Varying the expansion ratio of the telescope and/or the focal length of the lens changes the area and power density of the focal spot. Another parameter that is adjusted to control the micropore size is the pulse energy, which can be lowered from its peak value, by attenuation of the beam or by control of laser power.

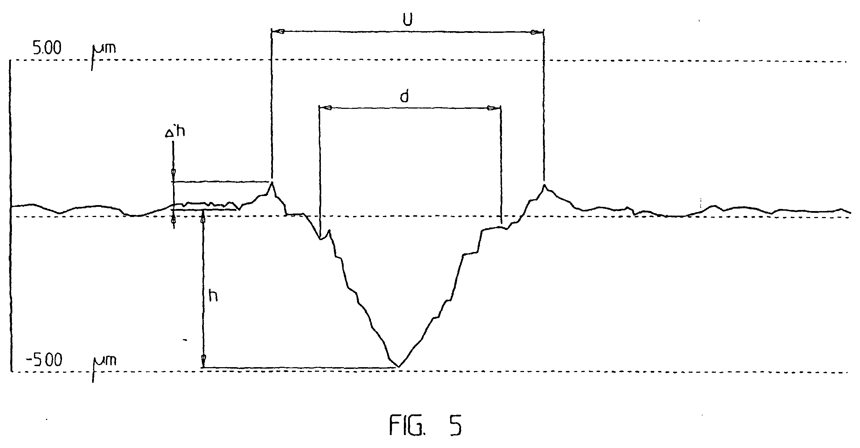

Figure 5 shows a profile of a micropore created in steel. Note that the vertical scale in Figure 5 is exaggerated compared to the lateral scale. Micropores created in steel typically are characterized by a rim around the central hole. The parameters of the laser beam and optical system in this case were:

| | |
|---|---|
| pulse energy | 4mJ |
| telescope beam expansion ratio | 1:7.5 |
| focal length of focusing lens | 77 mm |

The micropores thus created were about 5 microns deep (h), about 100 microns in diameter (u), and had a rim height ($\Delta$h) of between about 0.5 microns and about 1.5 microns. Focusing the laser beam to a tighter spot by making the expansion ratio 1:20 created micropores which are about 7-8 microns deep, have no rims, and have diameters of about 60-70 microns.

Micropores created in silicon carbide had hardly any measurable rim. Using the same parameters as those used to create the micropore shown in the Figure, the micropores created in silicon carbide were about 7-8 microns deep, and about 80 microns in diameter.

The difference between the behavior of steel and silicon carbide is a consequence of the difference between the melting behavior of metals and ceramics. The process of micropore formation in steel involves melting and subsequent boiling and evaporation of the surface layer. The focal spot of the laser has high power density at the center of the spot, sufficient for evaporation of the material. However, outside the center there is an area where the power density is high enough to melt the surface layer but not to evaporate it, thus creating a rim of material that streams away from the focal center. Micropore formation in silicon carbide does not involve melting: the ceramic either evaporates or disintegrates into its components. Thus, negligible rims are created around micropores in silicon carbide. The different micropore depth (5 microns vs. 8 microns) probably is due to lower reflection losses in silicon carbide than in steel.

The bearings of the present invention need not be homogeneous. For example, the surface region of a bearing of the present invention may be of a different material than the rest of the bearing. If the surface region is metallic, it often is important to adjust the process, as described above, to minimize the height of the rims around the micropores, to make the surface between the micropores substantially flat.

The preceding treatment applies to bearing surfaces separated by an incompressible (constant density) fluid. If the seal fluid is compressible, then the compressible Reynolds equation must be solved, to account for lateral variations in density. In the present case, the compressible Reynolds equation for the hydrodynamic pressure components over a single control cell is:

$$\frac{\partial}{\partial x}\left(\rho h^3 \frac{\partial p}{\partial x}\right) + \frac{\partial}{\partial z}\left(\rho h^3 \frac{\partial p}{\partial z}\right) = 6\mu U \frac{\partial(\rho h)}{\partial x} \qquad (13)$$

where $\rho$ is the density of the fluid. In general, $\rho$ and $p$ are related by the equation of state of the fluid. For many applications, such as the design of the slider head of a hard disk drive, which is separated from the hard disk by a film of air, the fluid may be modeled as an ideal gas. In that case, $\rho$ is proportional to $p$, and equation (13) becomes:

$$\frac{\partial}{\partial x}\left(p h^3 \frac{\partial p}{\partial x}\right) + \frac{\partial}{\partial z}\left(p h^3 \frac{\partial p}{\partial z}\right) = 6\mu U \frac{\partial(p h)}{\partial x} \qquad (14)$$

Unlike equation (1), equation (14) is nonlinear in $p$, and as such is more difficult to solve than equation (1). Techniques for solving the compressible Reynolds equation are well known in the art. See, for example, Oscar Pinkus and Beno Sternlicht, *Theory of Hydrodynamic Lubrication* (McGraw-Hill, New York, 1961), Chapter 5 (pp. 136-176); J. W. White and A. Nigam, "A Factored Implicit Scheme for the Numerical Solution of the Reynolds Equation at a Very Low Spacing", *Trans ASME, Jour. Of Lubr. Tech.* vol. 102 no. 1 pp. 80-85 (1980); and 1. Etsion and Y. Shaked, "The Effect of Curvature on the Load Carrying Capacity in Eccentric Gas Thrust Bearings", *Tribology Transactions* vol. 33 no. 3 pp. 293-300 (1990). Except for the complexities introduced by the nonlinearity of the compressible Reynolds equation, and except, of course, for the sealing fluid no longer being Newtonian, the modeling of the hydrodynamic pressure distribution proceeds as described above for an incompressible sealing fluid.

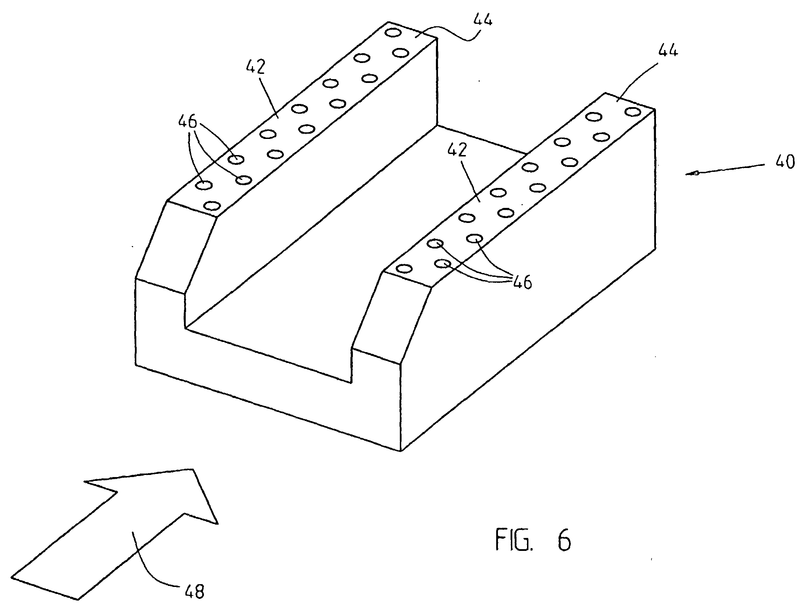

The above-mentioned application of the present invention, the design of the slider head of a hard disk drive, is significant in the continuing quest for higher density storage of digital data. The closer the surface of the rotating hard disk travels to the rails of the slider head, the denser the data stored on the hard disk can be packed thereon; but the slider head must not contact the hard disk, lest the hard disk be damaged. This is a particularly critical problem when the hard disk is rotating slowly, at startup and shutdown. Figure 6 shows a slider head **40** viewed from below. Surfaces **42** of rails **44** are shown textured with micropores **46.** Arrow **48** indicates the direction of motion of the hard disk relative to slider head **40**. The size and geometrical distribution of micropores **46** are selected using the method of the present invention.

While the invention has been described with respect to a limited number of embodiments, it will be appreciated that many variations, modifications and other applications of the invention as defined by the following claims may be made.

## Claims

**1.**　A method for designing and manufacturing a bearing having a plurality of micropores in a surface thereof, comprising the steps of:

(a) selecting a plurality of pore distributions and nonhemispherical pore geometries;
(b) modeling a hydrodynamic pressure distribution of pairs of bearing surfaces (111, 113, 211, 213) separated by a fluid selected from the class comprising compressible and incompressible fluids, one bearing surface (113, 213) of each of said pairs having one of said distributions of a plurality of pores (20, 22) of one of said geometries on a sliding face thereof; and
(c) selecting an optimal pore distribution and an optimal pore geometry based on said modeling.

**2.**　The method of claim 1, wherein said pore geometries include cylindrically symmetrical geometries.

**3.**　The method of claim 2, wherein said pore geometries include spherical caps and right circular cones.

**4.**　The method of claim 1, further comprising the step of:

(d) creating, in the surface (113, 213) of the bearing, the plurality of micropores (20, 22) having substantially said optimal pore distribution and substantially said optimal pore geometry.

**5.**　The method of claim 1, wherein said micropores (20, 22) are created using a pulsed laser beam.

**6.**　The method of claim 5, wherein each of said micropores (20, 22) is created using one pulse of said laser beam.

**7.**　The method of claim 6, wherein said laser beam has a beam profile, the method further comprising the step of:

(e) providing a beam profile control mechanism.

**8.**　The method of claim 7, wherein said beam profile control mechanism is selected from the group consisting of tailored optics and controlled multi-mode operation.

**9.**　The method of claim 6, further comprising the steps of:

(e) providing a focusing optical system, including an expanding telescope having an expansion ratio and a focusing lens having a focal length; and
(f) adjusting a parameter selected from the group consisting of said expansion ratio and said focal length.

**10.**　The method of claim 6, wherein each of said pulses has a pulse energy, the method further comprising the step of:

(e) adjusting said pulse energy.

**11.** The method of claim 1, wherein said modeling is effected by solving a compressible Reynolds equation.

**12.** The method of claim 1, wherein said compressible fluid is modeled as an ideal gas.

**13.** A bearing comprising:

(a) a surface region including a surface (113, 213); and
(b) a plurality of micropores (20, 22),

**characterized in that** said micropores (20, 22) have a substantially rotationally symmetric, nonhemispherical pore geometry, said micropores (20, 22) being regularly arranged on said surface (113, 213).

**14.** The bearing of claim 13 wherein said pore geometry is parametrized by a depth a and a diameter $D$, and wherein $a/D$ is between about 0.05 and about 0.15.

**15.** The bearing of claim 14, wherein said micropores (20, 22) are between about 2 microns and about 10 microns deep.

**16.** The bearing of claim 13, wherein said pore geometry is parametrized by a depth a and a diameter $D$, and wherein $a/D$ is about 0.5.

**17.** The bearing of claim 16, wherein said micropores (20, 22) are between about 20 microns and about 60 microns deep.

**18.** The bearing of claim 13, wherein said pore geometry is substantially conical.

**19.** The bearing of claim 18, wherein said micropores (20,22) are created by a laser.

**20.** The bearing of claim 19, wherein said surface region is metallic, and wherein said surface (113, 213) is substantially flat in between said micropores (20, 22).

**Patentansprüche**

**1.** Ein Verfahren zum Entwurf und zur Herstellung eines Lagers, das eine Vielzahl von Mikroporen in einer Oberfläche aufweist, das die folgenden Schritte umfasst:

(a) Auswahl einer Vielzahl von Porenverteilungen und nichthemisphärischen Porengeometrien;
(b) Modellierung einer hydrodynamischen Druckverteilung eines Paares von Lageroberflächen (111, 113, 211, 213), die durch ein Fluid getrennt werden, ausgewählt aus einer Klasse, die komprimierbare und nicht komprimierbare Fluide umfasst, wobei eine Lageroberfläche (113, 213) eines jeden der Paare eine der Verteilungen der Vielzahl von Poren (20, 22) einer der Geometrien auf einer gleitenden Oberfläche darauf aufweist; und
(c) Auswahl einer optimalen Porenverteilung und einer optimalen Porengeometrie, die auf der Modellierung basiert.

**2.** Das Verfahren nach Anspruch 1, worin die Porengeometrien zylindersymmetrische Geometrien einschließen.

**3.** Das Verfahren nach Anspruch 2, worin die Porengeometrien sphärische Kappen und gerade Kreiskegel einschließen.

**4.** Das Verfahren nach Anspruch 1, das weiterhin folgenden Schritt umfasst:

(d) Erzeugung der Vielzahl von Mikroporen (20, 22) in der Oberfläche (113, 213) des Lagers, die im Wesentlichen die optimale Porenverteilung und im Wesentlichen die optimale Porengeometrie aufweisen.

**5.** Das Verfahren nach Anspruch 1, worin die Mikroporen (20, 22) unter Verwendung eines gepulsten Laserstrahls erzeugt werden.

**6.** Das Verfahren nach Anspruch 5, worin jede der Mikroporen (20, 22) unter Verwendung eines Pulses des Laserstrahls erzeugt wird.

7. Das Verfahren nach Anspruch 6, worin der Laserstrahl ein Strahlenprofil aufweist, wobei das Verfahren weiterhin den folgenden Schritt umfasst:

   (e) Bereitstellung eines Strahlenprofilsteuerungsmechanismus.

8. Das Verfahren nach Anspruch 7, worin der Strahlenprofilsteuerungsmechanismus aus der Gruppe bestehend aus maßgeschneiderter Optik unTgesteuertem Multimodus-Betrieb ausgewählt wird.

9. Das Verfahren nach Anspruch 6, das weiterhin die folgenden Schritte umfasst:

   (e) Bereitstellen eines fokussierenden optischen Systems, das ein expandierbares Teleskop einschließt, das ein Expansionsverhältnis und eine fokussierende Linse aufweist, die eine Brennweite aufweist; und
   (f) Justieren eines Parameters, der aus der Gruppe bestehend aus dem Expansionsverhältnis und der Brennweite ausgewählt ist.

10. Das Verfahren nach Anspruch 6, worin jeder der Pulse eine Pulsenergie aufweist, wobei das Verfahren weiterhin den folgenden Schritt umfasst:

    (e) Justieren der Pulsenergie.

11. Das Verfahren nach Anspruch 1, worin die Modellierung durch die Auflösung einer komprimierbaren Reynolds-Gleichung durchgeführt wird.

12. Das Verfahren nach Anspruch 1, worin das komprimierbare Fluid als ein ideales Gas modelliert ist.

13. Ein Lager, das folgendes umfasst:

    (a) eine Oberflächenregion, die eine Oberfläche (113, 213) einschließt; und
    (b) eine Vielzahl von Mikroporen (20, 22),

    **dadurch gekennzeichnet, dass** die Mikroporen (20, 22) eine im Wesentlichen rotationssymmetrische, nicht-hemisphärische Porengeometrie aufweisen, wobei die Mikroporen (20, 22) regelmäßig auf der Oberfläche (113, 213) angeordnet sind.

14. Das Lager nach Anspruch 13, worin die Porengeometrie durch eine Tiefe a und einen Durchmesser $D$ parametrisiert ist, und worin $a/D$ zwischen etwa 0,05 und etwa 0,15 ist.

15. Das Lager nach Anspruch 14, worin die Mikroporen (20, 22) zwischen etwa 2 Mikron und etwa 10 Mikron tief sind.

16. Das Lager nach Anspruch 13, worin die Porengeometrie durch eine Tiefe a und einen Durchmesser $D$ parametrisiert ist, und worin $a/D$ etwa 0,5 ist.

17. Das Lager nach Anspruch 16, worin die Mikroporen (20, 22) zwischen etwa 20 Mikron und etwa 60 Mikron tief sind.

18. Das Lager nach Anspruch 13, worin die Porengeometrie im Wesentlichen kegelförmig ist.

19. Das Lager nach Anspruch 18, worin die Mikroporen (20, 22) durch einen Laser erzeugt werden.

20. Das Lager nach Anspruch 19, worin die Oberflächenregion metallisch ist, und worin die Oberfläche (113, 213) zwischen den Mikroporen (20, 22) im Wesentlichen flach ist.

**Revendications**

1. Un procédé de conception et de fabrication d'un palier comportant une pluralité de micro-pores dans une surface de celui-ci, comprenant les étapes consistant à :

(a) sélectionner une pluralité de distributions de pores et de géométries de pores non hémisphériques ;
(b) modéliser une distribution de la pression hydrodynamique des paires de surfaces de palier (111, 113, 211, 213) séparées par un fluide, sélectionnées dans la classe comprenant les fluides compressibles et incompressibles, une surface de palier (113, 213) de chacune desdites paires ayant l'une desdites distributions d'une pluralité de pores (20, 22) d'une desdites géométries sur une surface de glissement de celui-ci ; et
(c) sélectionner une distribution de pores optimale et une géométrie de pores optimale, en se basant sur ladite modélisation.

2. Le procédé selon la revendication 1, dans lequel lesdites géométries de pores comprennent des géométries symétriques cylindriquement.

3. Le procédé selon la revendication 2, dans lequel lesdites géométries de pores comprennent des capuchons sphériques et des cônes circulaires droits.

4. Le procédé selon la revendication 1, comprenant en outre l'étape consistant à :

(d) créer, dans la surface (113, 213) du palier, la pluralité de micro-pores (20, 22) ayant sensiblement ladite distribution de pores optimale et sensiblement ladite géométrie de pores optimale.

5. Le procédé selon la revendication 1, dans lequel lesdits micro-pores (20, 22) sont créés en utilisant un faisceau laser pulsé.

6. Le procédé selon la revendication 5, dans lequel chacun desdits micro-pores (20, 22) est créé en utilisant une impulsion dudit faisceau laser.

7. Le procédé selon la revendication 6, dans lequel ledit faisceau laser présente un profil de faisceau, le procédé comprenant en outre l'étape consistant à :

(e) fournir un mécanisme de contrôle du profil de faisceau.

8. Le procédé selon la revendication 7, dans lequel ledit mécanisme de contrôle de profil de faisceau est sélectionné dans le groupe composé d'optiques adaptées à des besoins spécifiques et un fonctionnement multi-mode contrôlé.

9. Le procédé selon la revendication 6, comprenant en outre les étapes consistant à :

(e) fournir un système optique de focalisation, incluant un télescope à expansion, ayant un rapport de grossissement et une lentille de focalisation présentant une distance focale ; et
(f) ajuster un paramètre, sélectionné dans le. groupe composé dudit rapport de grossissement et de ladite distance focale.

10. Le procédé selon la revendication 6, dans lequel chacune desdites impulsions présente une énergie d'impulsion, le procédé comprenant en outre l'étape consistant à :

(e) ajuster ladite énergie d'impulsion.

11. Le procédé selon la revendication 1, dans lequel ladite modélisation est effectuée en résolvant une équation de Reynolds compressible.

12. Le procédé selon la revendication 1, dans lequel ledit fluide compressible est modélisé en tant que gaz idéal.

13. Un palier, comprenant :

(a) une région de surface comprenant une surface (113, 213) ; et
(b) une pluralité de micro-pores (20, 22),

**caractérisé en ce que** lesdits micro-pores (20, 22) présentent une géométrie de pore non hémisphérique, sensiblement symétrique en rotation, lesdits micro-pores (20, 22) étant agencés de façon régulière sur ladite surface (113, 213).

**14.** Le palier selon la revendication 13, dans lequel ladite géométrie de pores est paramétrée par une profondeur a et un diamètre $D$, et dans lequel $a/D$ est compris entre environ 0,05 et environ 0,15.

**15.** Le procédé selon la revendication 14, dans lequel lesdits micro-pores (20, 22) ont une profondeur comprise entre environ 2 microns et environ 10 microns.

**16.** Le palier selon la revendication 13, dans lequel ladite géométrie de pore est paramétrée par une profondeur a et un diamètre $D$, et dans lequel $a/D$ est d'environ 0,5.

**17.** Le palier selon la revendication 16, dans lesquels lesdits micro-pores (20, 22) ont une profondeur comprise entre environ 20 microns et environ 60 microns.

**18.** Le palier selon la revendication 13, dans lequel ladite géométrie de pore est sensiblement conique.

**19.** Le palier selon la revendication 18, dans lequel lesdits micro-pores (20, 22) sont créés par un laser.

**20.** Le palier selon la revendication 19, dans lequel ladite région de surface est métallique, et dans lequel ladite surface (113, 213) est sensiblement plate entre lesdits micro-pores (20, 22).

FIG. 1A

FIG. 1B

FIG. 1C

FIG. 2

FIG. 3A

FIG. 3B

FIG. 4A

FIG. 4B

FIG. 5

FIG. 6